# EUROPÄISCHE PATENTSCHRIFT

(11) **EP 0 231 034 B1**
(45) Veröffentlichungstag und Bekanntmachung des Hinweises auf die Patenterteilung: **30.03.1994**
(21) Anmeldenummer: 87101876.8
(22) Anmeldetag: 15.12.1983
(51) Int. Cl.: B29C 47/76

(54) **Verfahren zur Herstellung von peroxidhaltigen Pasten bzw.plastischen Massen**
Method of manufacturing pastes or plastic masses containing peroxide
Procédé de fabrication de pâtes ou de masses plastiques contenant du peroxyde

(30) Priorität: 30.12.1982 DE 3248659
(43) Veröffentlichungstag der Anmeldung: 05.08.1987
(62) Teilanmeldung aus: 83112655.2
(73) Patentinhaber: Peroxid-Chemie GmbH, 82049 Pullach (DE)
(72) Erfinder: Rossberger, Erwin, Dr., D-8021 Grossdingharting (DE); Weinmaier, Josef, Dr., D-8023 Pullach (DE); Ailler, Nikolaus, D-8195 Egling (DE)
(74) Vertreter: Prechtel, Jörg, Dipl.-Phys. Dr.

(56) Entgegenhaltungen:
- DE-A- 2 400 271
- DE-A- 3 227 983
- DE-B- 1 554 866
- DE-B- 1 679 878
- DE-C- 915 689
- FR-A- 1 575 159
- GB-A- 927 501
- GB-A- 1 452 579
- US-A- 4 117 548
- KUNSTSTOFFE
- PLASTVERARBEITER

## Beschreibung

Die Erfindung betrifft eine Entgasungseinrichtung an einem Schnecken-Extruder oder dergl. mit einem die Schnecke bzw. die Schnecken aufnehmenden Schneckengehäuse, welches mit wenigstens einem in den Schneckenraum des Gehäuses mündenden Entgasungskanal und einer am Entgasungskanal angeordneten Rückfördereinrichtung für aus dem Schneckenraum in den Entgasungskanal eingedrungenes Material versehen ist, wobei die Rückfördereinrichtung ein innerhalb des Entgasungskanals angeordnetes, zum Schneckenraum hin förderndes Förderelement umfaßt.

Bei der Verarbeitung von Kunstoffen mit Hilfe eines Schnecken-Extruders oder dergl. (insbesondere einem Schnecken-Kneter oder einer Schnecken-Spritzgießmaschine jeweils mit einer bzw. mehreren Schnecken) tritt häufig das Problem auf, daß das dem Schnecken-Extruder oder dergl. zugeführte Material mit Wasser vermischt ist, welches z.B. von einem Waschprozess herrührt. Zusätzlich oder alternativ kann das zugeführte Material Lösungs- und Verdünnungsmittel wie Kohlenwasserstoffe, Chlor-Kohlenwasserstoffe, Ketone und flüchtige Reaktionsprodukte wie Alkohole und/oder Ester enthalten, welche zusammen mit dem Wasser entfernt werden müssen, um optimale Qualität des vom Schnecken-Extruder oder dergl. gelieferten Produkts zu erhalten. Das im Schnecken-Extruder zu verarbeitende Material muß folglich vor Zugabe zum Schnecken-Extruder oder innerhalb des Schnecken-Extruders entgast werden, wobei man in diesem Zusammenhang unter dem Ausdruck "Entgasen" sowohl die Beseitigung von Restfeuchtigkeit (durch Verdampfen oder Verdunsten) versteht als auch die Entfernung von gelösten Gasen und flüchtigen Bestandteilen. Die Entgasung in gesonderten, dem Schnecken-Extruder vorgeschalteten Geräten hat den Nachteil größeren Bauaufwands sowie einer möglichen erneuten Kontamination, insbesondere Anfeuchtung des Materials auf dem Wege vom Gerät zum Schnecken-Extruder.

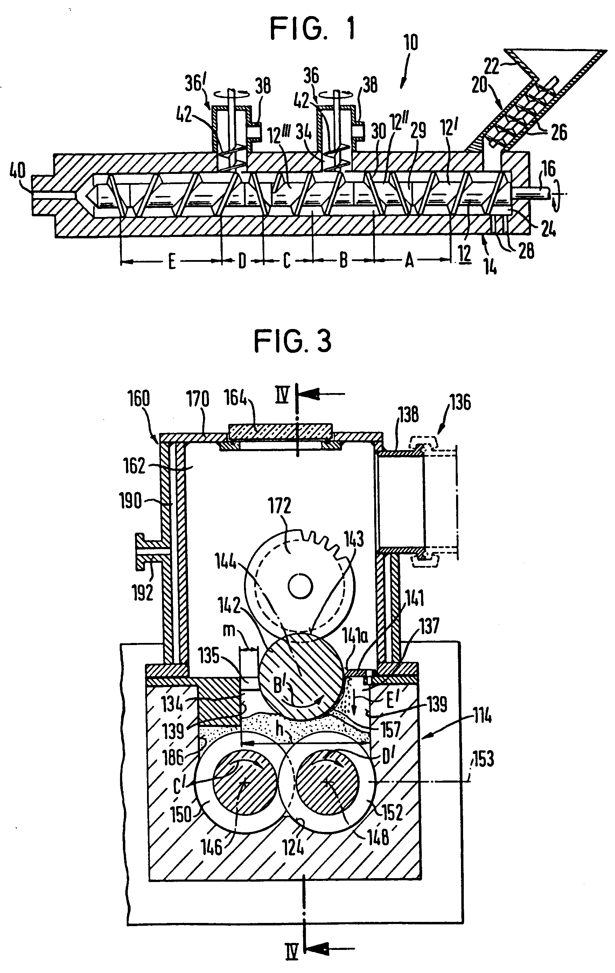

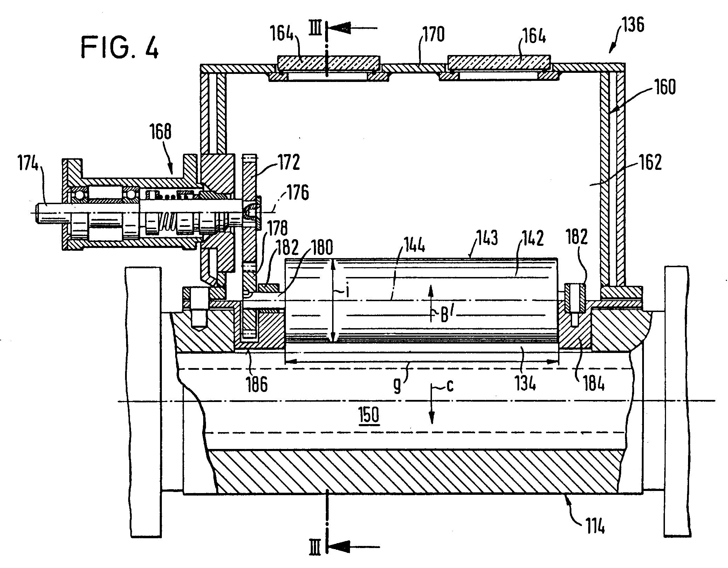

Eine Entgasungseinrichtung ist beispielsweise aus der Zeitschrift "Plastverarbeiter", Vol. 28, Nr. 5, 1977, Seiten 233 bis 240 bekannt. Hierbei erhält man die Entgasung des Materials innerhalb des Schnecken-Extruders mit Hilfe eines radialen Entgasungskanals im Bereich der Längenmitte der Schnecke (Abb. 1 und 3). Der Entgasungszone im Bereich des Entgasungskanals geht eine Kompressionszone voraus. Beim Übergang von der Kompressionszone in die auf Atmosphärendruck liegende Entgasungszone erfolgt eine Entspannung des Materials, was zu einer Gasabgabe durch das Material führt. Ein Eindringen des Materials in den Entgasungskanal versucht man dadurch auszuschließen, daß man in diesem Bereich den Kerndurchmesser stark reduziert, so daß das Material den Gehäusequerschnitt nicht vollständig ausfüllt. Diese Maßnahme hat sich jedoch noch nicht als ausreichend zur Verhinderung eines Materialflusses in den Entgasungskanal herausgestellt. Um diesem Problem zu begegnen, ist es aus der eingangs genannten Zeitschriftenstelle bekannt, im Bereich des Entgasungskanals eine Entgasungstasche in den ansonsten zylindrischen Schneckeninnenraum einzuformen. Weitere spezielle Ausgestaltungen der Entgasungsöffnung im Schneckenzylinder sind aus der Zeitschrift "Kunststoffe" im Band 64, 1974, Seiten 175 bis 177 bekannt (Abb. 3). Ferner ist ein sog. By-Pass-Extruder bekannt (z.B. Wittfoht "Kunststofftechnisches Wörterbuch", Teil 3, Carl Hanser Verlag, München, Wien 1978, Seite 367), bei welchem zur Druckregelung ein in die Entgasungszone einmündender, durchflußregelbarer By-Pass-Kanal vorgesehen ist. Diese bekannten Maßnahmen sind jedoch häufig nicht völlig befriedigend, da die genaue Einstellung des Materialniveaus knapp unter der Entgasungskanalöffnung nur sehr schwer oder überhaupt nicht erreichbar ist. Sicherheitshalber wird man folglich das Materialniveau unterhalb der Entgasungsöffnung niedriger als unbedingt erforderlich einstellen, was den Materialdurchsatz durch den Extruder verringert. Bei Materialien hoher Viskosität, wie z.B. Pasten, konnte bisher diese sog. Zylinder-Entgasung nur in äußerst beschränktem Umfange angewandt werden, da das pastenförmige Material stets in die Entgasungskanäle eindringt. Dies führt zum einen zur Verstopfung der Entgasungskanäle und zum anderen dazu, daß ein Teil des Materials, nämlich das in den Kanal eingedrungene Material, nicht mehr dem vorgesehenen kontinuierlichen Verarbeitungsgang unterliegt und andere Materialeigenschaften annimmt. Wird nun dieses abgezweigte Material früher oder später wieder in den Schneckenraum zurückbefördert, so ergibt sich eine Verschlechterung der Materialhomogenität.

Bei einer bekannten Entgasungseinrichtung der eingangs genannten Art besteht die Rückfördereinrichtung aus einer in einem Entgasungsgehäuse angeordneten Doppelschnecke, also aus zwei ineinandergreifenden Schnecken, welche längs ihres. Umfanges, ausgenommen den gegenseitigen Überschneidungsbereich, mehr oder weniger abdichtend an der Innenumfangsfläche des im Querschnitt angenähert eine Acht beschreibenden Gehäuseinnenraums anliegen. Es hat sich nun herausgestellt, daß bei relativ zähen Massen im Bereich zwischen 0,1 und 10 kPa.s. keine völlig zufriedenstellende Entgasung erreicht wird. So kann es zur sog. flash-Verdampfung kommen, also einer schlagartigen Verdampfung, bei welcher Massenteilchen des im Extruder zu verarbeitenden Materials vom Gasstrom mitgerissen werden, die zu einem Zusetzen der Rückfördereinrichtung führen.

Die US-A-4117548 beschreibt einen Extruder mit einem Entgasungskanal, der eine Förderschnecke zur Rückführung des Materials in den Extruder enthält. Dieses rückzuführende Material besteht hauptsächlich aus kleinen Polymerteilchen, die mit "fines" bezeichnet sind. Der Zweck dieser Förderschnecke ist es in erster Linie, das Volumen innerhalb des Entgasungskanals zu regulieren, um die Geschwindigkeit des Dampfes zu verringern, wodurch die Menge der kleinen Polymerteilchen, die in die oberen Teile des Entgasungskanals strömen begrenzt wird. Die wesentliche Aufgabe liegt darin zu verhindern, daß kleine Polymerteilchen von dem durch den Entgasungskanal strömenden Gas mitgerissen werden.

Die Aufgabe der Erfindung liegt darin, die Entgasungseinrichtung der eingangs genannten Art dahingehend zu verbessern, daß sie zuverlässig eine Verstopfung des Entgasungskanals verhindert, insbesondere bei pastenartigem Material.

Diese Aufgabe wird erfindungsgemäß durch ein kontinuierliches Verfahren zur Herstellung einer peroxidhaltigen Zusammensetzung mit hohem Peroxidgehalt in Form einer Paste oder plastischen Masse, wobei man eine Mischung einer Peroxid enthaltenden Zusammensetzung mit mindestens 40 Gew.-% Peroxid in fester und/oder flüssiger Form zusammen mit verdampfbaren Bestandteilen in einen Schnecken-Extruder einbringt; die darin enthaltende Mischung homogenisiert und entgast, um sie von verdampfbaren Bestandteilen zu befreien, die freie Oberfläche (Abdampffläche) der im Extruder zu verarbeitenden Mischung innerhalb des Entgasungskanals mehr als 40 % des Entgasungskanalquerschnitts beträgt und; man im Entgasungskanal eine Rückfördereinrichtung vorsieht, um im wesentlichen die in den Entgasungskanal eintretende Mischung in den Extruder zurückzuführen und der kleinste Gasdurchgangsquerschnitt in der Rückfördereinrichtung wenigstens das 0,1-fache des Entgasungskanalquerschnitts beträgt, gelöst. Eine bevorzugte Ausführungsform ist Gegenstand von Anspruch 2.

Ein weiterer Gegenstand der vorliegenden Erfindung ist eine Entgasungseinrichtung an einem Schnecken-Extruder oder dergleichen zur Durchführung des Verfahrens nach einem der Ansprüche 1 oder 2, mit einem die Schnecke bzw. die Schnecken aufnehmenden Schneckengehäuse, welches mit wenigstens einem in den Schneckenraum des Gehäuses mündenden Entgasungskanal und einer am Entgasungskanal angeordneten Rückfördereinrichtung für aus dem Schneckenraum in den Entgasungskanal eingedrungenes Material versehen ist, wobei die Rückfördereinrichtung ein innerhalb des Entgasungskanals angeordnetes, zum Schneckenraum hin förderndes Förderelement umfaßt, welches dadurch gekennzeichnet ist, daß die freie Oberfläche (Abdampffläche) des im Extruder zu verarbeitenden Materials innerhalb des Entgasungskanals mehr als 40 % des Entgasungskanalquerschnitts beträgt, und daß der kleinste Gasdurchgangsquerschnitt der Rückfördereinrichtung wenigstens das 0,1-fache, besser wenigstens das 0,15-fache des Entgasungskanalquerschnitts beträgt. Bevorzugte Ausführungsformen sind Gegenstand der Ansprüche 4 bis 14.

Es hat sich gezeigt, daß die erfindungsgemäß ausgebildete Rückfördereinrichtung die Abführung auch großer Gasvolumina erlaubt, ohne daß der Entgasungskanal verstopft. Der Grund hierfür mag darin liegen, daß es aufgrund der großen Abdampffläche zu einer ruhigen Brüdenentwicklung kommt unter Vermeidung des Mitreißens von Massenteilchen. Unter Abdampffläche wird hier die mit dem Raum außerhalb des Schneckengehäuses, also entweder der Umgebung oder einer Vakuum-Absauganlage unmittelbar in Verbindung stehende Oberfläche des zu verarbeitenden Materials im Extruder innerhalb des Entgasungskanals verstanden. Zwischen der Abdampffläche und der Umgebung bzw. der Vakuum-Absauganlage kann ggf. auch eine Durchgangsstelle mit vermindertem Kanalquerschnitt vorhanden sein, welcher jedoch so groß zu dimensionieren ist, daß sich kein merklicher Überdruck oberhalb der Abdampffläche ausbildet, so daß die Brüdenentwicklung ungestört ist. Unter dem Begriff "Entgasungsquerschnitt" wird in diesem Zusammenhang der reine Kanalquerschnitt (d.h. ohne Förderelement) verstanden, welcher der Eintrittsfläche für das Extrudermaterial zum Eintritt in den Entgasungskanal entspricht. Der Gasdurchgangsquerschnitt dagegen ist der sich dem Gasstrom bietende Querschnitt bei eingesetztem Förderelement. Im Falle der bekannten Rückfördereinrichtung sind die Abdampffläche und der Gasdurchgangsquerschnitt wesentlich geringer. Dies liegt zum einen daran, daß die beiden Schneckenkerne die zur Verfügung stehende Abdampffläche stark reduzieren und zum anderen darin, daß aufgrund des Ineinandergreifens der beiden Schnecken nicht der zwischen zwei aufeinanderfolgenden Schneckengangflanken gebildete Raum als Gasdurchgangsquerschnitt zur Verfügung steht sondern lediglich ein Bruchteil hiervon entsprechend dem lichten Abstand der ineinandergreifenden Schnecken.

Gemäß einer ersten erfindungsgemäßen Ausführungsform ist vorgesehen, daß die Fördereinrichtung einen wenigstens einen Teil des Entgasungskanalquerschnitts überstreichenden, einzelnen, vorzugsweise rotierenden, geneigten Spatel umfaßt, vorzugsweise in Form einer einzigen Förderschnecke im Entgasungskanal, vorzugsweise mit zur Kanalachse im wesentlichen paralleler Schneckenachse, welche zum Schneckenraum hin fördert. Bei Pastenmaterial mit relativ hoher Viskosität besteht die Möglichkeit, den Förderschneckendurchmesser geringer als den Durchmesser des Entgasungskanals zu wählen, da aufgrund der hohen Viskosität und Steifigkeit von der Förderschnecke auch von ihr mehr oder weniger entferntes Material mittransportiert wird. In einer besonders bevorzugten Ausführungsform der Erfindung ist jedoch vorgesehen, daß die Förderschneckenachse mit der Achse des hohlzylindrischen Entgasungskanals zusammenfällt und daß der Förderschneckendurchmesser dem Kanaldurchmesser im wesentlichen entspricht. Diese sich für hohe Viskositäten (im Bereich von 1 bis 10 kPa.s.) des pastenförmigen Materials eignende Ausführungsform stellt sicher, daß die Kanalinnenwand stets frei von Materialablagerungen bleibt.

In einer Weiterbildung der Erfindung wird vorgeschlagen, daß der oder die Schneckengänge der Förderschnecke am schneckenraumnächsten Schneckenende jeweils eine auf den Kern radial zulaufende Endkante aufweisen. Das rotierende Schneckenende streicht folglich entlang einer ebenen, den Kanalquerschnitt ausfüllenden Kreisfläche am im Kanal hochquellenden Material entlang, welches auf diese Weise sogleich wieder zurück in den Schneckenraum gedrückt wird. Da die Schnecke jedoch zu jedem Zeitpunkt nur mit der Stirnfläche des Kerns sowie mit der Schneckengangkante am Material anliegt, ergibt sich eine vom Rest des Kanalquerschnitts gebildete, relativ große freie Abdampffläche des Materials. Die am Material entlangstreifende Kante bewirkt eine gewisse Durchwalkung des Materials, was wiederum das Freisetzen der Gase erleichtert. Da die gebildeten Dämpfe ungehindert entlang der Windungen der Förderschnecke strömen können, ergibt sich, daß der kleinste Gasdurchgangsquerschnitt dieser Rückfördereinrichtung gleich der Abdampffläche ist.

Als besonders günstig hat sich ein Schneckendurchmesser herausgestellt, der etwa das 5-fache bis 20-fache, vorzugsweise das etwa 8- bis 15-fache, am besten etwa das 10-fache des Kerndurchmessers (jeweils der Förderschnecke) beträgt.

Man erhält einen maximalen Kanalquerschnitt und damit eine maximale Abdampffläche des Materials für einen gegebenen Extruder, wenn, wie erfindungsgemäß vorgeschlagen, der Kanaldurchmesser etwa der zur Schneckenraumlängsachse und zur Kanalachse senkrechten Abmessung des Schneckenraums entspricht.

Als vorteilhaft hat sich eine Rotationsgeschwindigkeit der Förderschnecke herausgestellt, welche etwa 20 bis 120, vorzugsweise etwa 40 bis 80, am besten etwa 60 Umdrehungen, pro Minute beträgt.

Gemäß einer weiteren Ausführungsform der Erfindung ist vorgesehen, daß die Rückfördereinrichtung eine Förderwalze im Entgasungskanal mit zur Kanalachse im wesentlichen senkrechter Walzenachse umfaßt, welche zum Schneckenraum hin fördert. Diese Ausführungsform eignet sich universell für Pasten in einem großen Viskositätsbereich (0,1 bis 10 kPa.s); sie hat sich jedoch als besonders vorteilhaft für Mischungen bzw. Pasten mit Viskositäten im Bereich von 0,7 bis 3 kPa.s. herausgestellt.

Das von der Walze rückgeführte Material wird unmittelbar wieder dem übrigen Materialstrom im Schneckenraum im richtigen Bewegungssinne zugeführt, wenn gemäß der Erfindung der Rotationssinn der Förderwalze zum Rotationssinn des bzw. der Schnecken im Schneckenraum entgegengesetzt ist.

Um Materialablagerungen an der Förderwalze zuverlässig auszuschließen, ist nach der Erfindung ein sich längs der Förderwalze erstreckender Abstreifer vorgesehen für auf dem Walzenumfang angelagertes Material aus dem Schneckenraum. Ferner wird vorgeschlagen, daß der Abstreifer derart oberhalb einer Schnecke des Schneckenraums angeordnet ist, daß vom Abstreifer fallendes Material von der Schnecke mitgenommen wird. Dies stellt sicher, daß auch das vom Abstreifer fallende Material in der vorgesehenen Weise unmittelbar weiterverarbeitet wird.

In einer besonders bevorzugten Ausführungsform der Erfindung ist die Förderwalze derart im Entgasungskanal angeordnet, daß zwischen den zur Walzenachse im wesentlichen parallelen Längsseitenwänden des Entgasungskanals und dem Walzenumfang jeweils ein Durchgang gebildet ist, und daß in demjenigen Durchgang, welcher in Walzendrehrichtung auf den Schneckenraum unmittelbar folgt, der Abstreifer angeordnet ist. Der kleinste Gasdurchgangsquerschnitt der Rückführeinrichtung entspricht dem Gesamtdurchgangsquerschnitt beider Durchgänge. In den meisten Fällen genügt es, wenn lediglich einer der Durchgänge frei ist und der andere vom Abstreifer abgeschlossen wird, da auch der Querschnitt eines einzigen Durchgangs im allgemeinen völlig ausreichend ist, um einen den Abdampfvorgang behindernden Druckaufbau oberhalb der Abdampffläche zu verhindern.

Bei den vorgesehenen hohen Pastenviskositäten wird von der Förderwalze auch relativ weit weg liegendes Material mitbefördert, so daß der Durchmesser der Walze um einiges kleiner gewählt werden kann als die entsprechende Abmessung des im Querschnitt vorzugsweise rechteckigen Entgasungskanals. Vorzugsweise ist vorgesehen, daß der Förderwalzendurchmesser etwa das 0,4- bis 0,9-fache, besser das 0,5- bis 0,7-fache, am besten das etwa 0,65-fache des lichten Abstands der zur Förderwellenachse parallelen Längsseitenwände des Entgasungskanals beträgt.

Insgesamt ergibt sich eine relativ große Abdampffläche, welche sowohl von den Oberflächen des in den Entgasungskanal hochgequollenen Extrudermaterials beidseits der mehr oder weniger weit in das Extrudermaterial eintauchenden Förderwalze gebildet ist, wie auch von der an der Förderwalze haftenden und schließlich vom Abstreifer vom Walzenumfang entfernten Materialschichtfläche gebildet ist. Die effektive Abdampffläche kann somit sogar größer als der Entgasungsquerschnitt sein. Der wenigstens eine offene Durchgang bietet einen ausreichenden Gasdurchgangsquerschnitt für die freigewordenen Gase.

Wenn, wie erfindungsgemäß vorgeschlagen, die Walzenachse im wesentlichen parallel zur Schneckenraumlängsachse verläuft, kann die Walzenachsenlänge relativ groß gewählt werden, da ihre Größe nunmehr unabhängig von den Querschnittsdimensionen des Schneckenraums ist. Dementsprechend vergrößert sich auch die Abdampffläche sowie der kleinste Gasdurchgangsquerschnitt.

Die erfindungsgemäße Entgasungseinrichtung läßt sich mit besonderem Vorteil auch in Verbindung mit einer Vakuumabsaugeinrichtung einzusetzen, da die Rückfördereinrichtung auch hier zuverlässig für ein Verbleiben des Materials im Schneckenraum sorgt. Hierzu wird vorgeschlagen, einen das äußere Entgasungskanalende abdeckenden Absaugaufsatz am Schneckengehäuse einzusetzen, welcher an eine Vakuumabsaugeinrichtung angeschlossen ist. Um den Antriebsmotor für die Rückfördereinrichtung außerhalb des Vakuumbereichs betreiben zu können, wird vorgeschlagen, daß der Absaugaufsatz eine Vakuumdurchführung für eine die Rückfördereinrichtung antreibende, mit einem Antriebsmotor, vorzugsweise Durckluftmotor, verkoppelte Antriebswelle aufweist. Als Antriebsmotor kommt beispielsweise ein Elektromotor oder auch ein Druckluftmotor in Frage.

Besonders einfacher Aufbau ergibt sich im Falle einer Förderschnecke, da dann die Antriebswelle mit der Förderschneckenwelle starr verbunden, vorzugsweise mit dieser einstückig ausgebildet sein kann.

Für den Fall der Verwendung einer Förderwalze wird vorgeschlagen, daß die Antriebswelle mit der Walzenwelle über ein Getriebe, vorzugsweise Stirnradgetriebe, verbunden ist.

Um eine gründliche Entgasung bzw. Trocknung sicherzustellen und um der Bildung von Ablagerungen in der Rückfördereinrichtung entgegenzuwirken, wird vorgeschlagen, daß die Rückfördereinrichtung heizbar ist, vorzugsweise durch Hindurchleiten von Heizmedium durch einen Gehäusewandinnenraum eines doppelwandigen Gehäuses der Rückfördereinrichtung.

Die Erfindung betrifft ferner einen Extruder mit einer Entgasungseinrichtung der vorstehend beschriebenen Art, welcher als Doppelwellen-Extruder, vorzugsweise mit gleichsinnig drehenden Schnecken, ausgebildet ist. Um möglichst große Abdampffläche des Materials zu erhalten, also möglichst grossen Kanalquerschnitt, wird vorgeschlagen, daß die Kanalachse senkrecht zu der durch die beiden Schneckenachsen definierten Ebene, vorzugsweise in etwa gleichem Abstand, zu beiden Schneckenachsen verläuft. Der Begriff "Abdampffläche" beschränkt sich in diesem Zusammenhang natürlich nicht auf die Abgabe von Dampf durch das Material sondern auf die Abgabe von den Gasen jeglicher Herkunft.

Die Erfindung betrifft ferner einen Extruder mit einer Entgasungseinrichtung der vorstehend beschriebenen Art, welcher als Einwellen-Extruder mit axial, vorzugsweise impulsartig bewegbarer Schnecke, ausgebildet ist.

Um bei derartigen Extrudern aber auch z.B. bei Planet-Walzen-Extrudern, Schnecken-Knetern oder Schnecken-Spritzgießmaschinen eine möglichst weitgehende Entgasung zu erhalten, wird erfindungsgemäß vorgeschlagen, zwei in Richtung der Schneckenraum-Längsachse hintereinander mit Abstand angeordnete Entgasungseinrichtungen der erfindungsmäßen Art einzusetzen.

Für einen sicheren Ablauf des Verarbeitungsverfahrens mit Hilfe des Schnecken-Extruders oder dergl. ist es von wesentlicher Bedeutung, daß das Material mit hoher Gleichmäßigkeit dem Extruder zugeführt wird. Hierfür ist erfindungsgemäß eine Zudosiereinrichtung, vorzugsweise eine Exzenter-Schneckenpumpe,an der Materialzugabeöffnung des Extruders vorgesehen.

Die Erfindung betrifft ferner ein Verfahren zur Herstellung von peroxidhaltigen Pasten bzw. plastischen Massen, insbesondere unter Verwendung der Entgasungseinrichtung nach einem der vorhergehenden Ansprüche. Derartige Pasten bzw. plastische Massen enthalten organische Peroxide in einer plastischen oder flüssigen Matrix, z.B. einem Phlegmatisierungsmittel oder Mischungen derselben. Derartige Mischungen von organischen Peroxiden mit Trägersubstanzen werden bisher in Knetern oder Planetenrührwerken chargenweise hergestellt. Damit die Paste die notwendige Homogenität aufweist, sind Verarbeitungszeiten von 5 bis 20 Stunden (im Kneter) erforderlich. Bei sehr hohen Pastenviskositäten von 1 bis 5 kPa.s. ist eine Homogenisierung im Kneter oft nicht mehr in ausreichendem Maße möglich. Zusätzliche Schwierigkeiten treten bei sehr viskosen Pasten auf, da dann Hohlräume im Kneter entstehen, wobei die Paste oberhalb der Knetarme Brücken bildet und deshalb nicht mehr homogenisiert wird. Man kann zwar eine Nachbehandlung in einem Zwei- oder Dreiwalzenwerk durchführen, um die gewünschte Homogenität zu erreichen, was jedoch die Wirtschaftlichkeit des Verfahrens erheblich beeinträchtigt. Als Ausgangsstoffe für die Herstellung bzw. Abmischung der peroxidhaltigen Pasten kommen bevorzugt Mischungen zum Einsatz, welche durch einen in-situ-Prozeß aus der chemischen Synthese erhalten werden, weil solche Produkte das Peroxid in fein kristalliner Form gleichmäßig in einer Matrix verteilt enthalten. Diese Syntheseprodukte sind mit vom Waschprozeß der Masse herrührendem Wasser vermischt (im allgemeinen 4 bis 10% Wasser). Ferner können derartige Pasten-Vorprodukte Lösungs- und Verdünnungsmittel wie Kohlenwasserstoffe, Chlor-Kohlenwasserstoffe und/oder Ketone und flüchtige Reaktionsprodukte wie Alkohole und/oder Ester enthalten, welche entfernt werden müssen, um eine für die spätere Anwendung dieser Pasten optimale Qualität zu erhalten.

Von besonderer anwendendungstechnischer Bedeutung ist auch die Partikelgröße des in der flüssigen oder plastischen Matrix verteilten Peroxids sowie die Gleichmäßigkeit der Verteilung. So ist es z.B. für die Vernetzung von Silikonkautschuk mit einem Peroxid- wie Benzoylperoxid oder Dichlorbenzoylperoxid - notwendig, daß die Kristallgröße des Peroxids 20 µm nicht übersteigt, weil sich sonst bei der Vernetzungsreaktion Bläschen im Silikonkautschuk bilden können. Falls die Paste Agglomerate des Peroxids enthält, können sich nach deren Einarbeitung in den Silikonkautschuk inhomogene Verteilungen ergeben, welche nach der Vulkanisation unzureichende Festigkeitswerte zur Folge haben.

Bei der bekannten Arbeitsweise mit Herstellung der Pasten im Kneter erhält man nur etwa 70% der Chargen in der erforderlichen Qualität; der Rest muß auf umständliche Weise mit einem Walzenstuhl nachhomogenisiert werden. Auch ist der Herstellungsprozeß mittels Kneter bzw. Walzwerk sehr arbeitsintensiv, da die Befüllung und Entleerung manuell erfolgen muß. Die üblichen Förderschnecken an den Knetapparaten sind ungeeignet, da bei der Entleerung eines Kneters mit einer Austragsschnecke nur max. 80% des Inhalts entnommen werden kann; der Rost bleibt an Wänden und Knetarmen sowie am Deckel des Kneters hängen.

Erfindungsgemäß wird ein Verfahren bereitgestellt, welches in der Lage ist, feinste Teilchen, insbesondere von <10 µm Größe in einer flüssigen bzw. plastischen Matrix weitestgehend homogen und agglomeratfrei zu verteilen unter Entfernung flüchtiger Anteile, darunter auch von Feuchtigkeit aus der Mischung. Auch bietet das erfindungsgemäße Verfahren die Möglichkeit der Automatisierung und der Verarbeitung unter Atmosphärenabschluß, was die Sicherheitsrisiken bei der Verarbeitung von organischen Peroxiden weitgehend eliminiert.

Hierzu ist das erfindungsgemäße Verfahren dadurch gekennzeichnet, daß eine plastifizierbare oder plastische Mischung von festen und/oder flüssigen organischen Peroxiden und ggf. festen Zusatzstoffen mit einer flüssigen oder plastifizierbaren Matrix in einem Schnecken-Extruder oder Durchlaufkneter von verdampfbaren Anteilen befreit und (zugleich) homogenisiert wird.

Das erfindungsgemäße Verfahren läßt sich im Gegensatz zum bekannten Verfahren kontinuierlich durchführen, wenn die zu behandelnde Mischung kontinuierlich durch eine Verdampfungs- bzw. Trockungszone geführt wird.

Der Entgasungs- bzw. Entfeuchtungsgrad läßt sich weiterhin dadurch steigern, daß der Verdampfungs- bzw. Trocknungsprozeß im Vakuum durchgeführt wird.

Ein Eindringen des Materials in den Entgasungskanal oder gar ein Mitreißen des Materials mit den austretenden Gasen im Falle der Vakuumentgasung wird erfindungsgemäß dadurch zuverlässig verhindert, daß im Vakuumentgasungskanal des Schnecken-Extruders bzw. Durchlaufkneters in einen Entgasungskanal eindringendes Material durch eine Rückführeinrichtung rückgeführt wird. Von besonderem Vorteil ist auch, daß der Einsatz der Rückführeinrichtung es ermöglicht, einen vergrößerten Entgasungskanalquerschnitt zu wählen und damit eine vergrößerte Abdampffläche des Materials.

Die Erfindung wird im folgenden an bevorzugten Ausführungsbeispielen anhand der Zeichnung erläutert.

Es zeigt:
- Fig. 1: eine grobschematische Seitenansicht eines erfindungsgemäßen Schnecken-Extruders;
- Fig. 2: einen Querschnitt in vergrößertem Maßstab durch einen Schnecken-Extruder ähnlich Fig. 1 im Bereich der Entgasungseinrichtung in einer ersten Ausführungsform;
- Fig. 3: einen Schnitt ähnlich Fig. 2 mit einer zweiten Ausführungsform der Entgasungseinrichtung (Schnitt nach Linie III-III in Fig. 4); und
- Fig. 4: einen Schnitt der Anordnung in Fig. 3 nach Linie IV-IV.

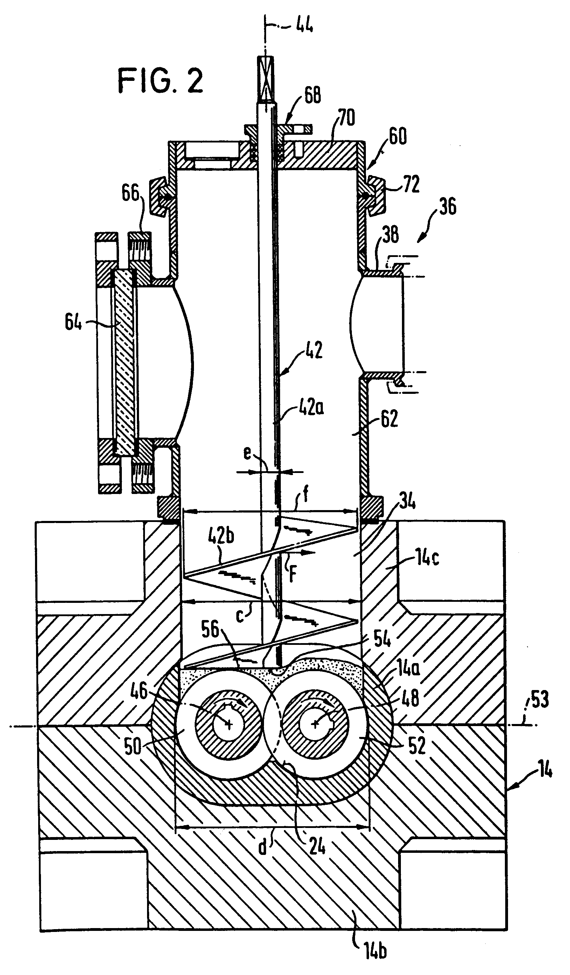

Der in Fig. 1 grobschematisch dargestellte Schnecken-Extruder 10 besteht aus einem eine oder mehrere Schnecken 12 aufnehmenden Schneckengehäuse 14. Der Einfachheit halber ist in Fig. 1 lediglich eine Schnecke eines Zweiwellen-Extruders, wie dieser in den Fig. 2 und 3 näher erkennbar ist, dargestellt. Am in Fig. 1 rechten Ende des Gehäuses 14 ist eine Antriebswelle 16 der Schnecke 12 aus dem Gehäuse 14 herausgeführt zum Anschluß an einen nicht dargestellten Motor. Das zur Verarbeitung im Extruder 10 vorgesehene Material wird dem Exzenter 10 durch eine symbolisch dargestellte Exzenter-Schneckenpumpe 20 (mit Zugabetrichter 22) zugeführt, welche in den die Schnecke bzw. Schnecken aufnehmenden Schneckenraum 24 am in Fig. 1 rechten Extruderende einmündet. Bei der Verdichtung in der Exzenter-Schneckenpumpe 20 bzw. am rechten Schneckenende durch die Kompression des Materialsfreiwerdendes Wasser kann bereits hier abgeleitet werden, was durch Entwässerungskanäle 26 bzw. 28 in Fig. 1 symbolisch angedeutet ist.

Die Schnecke 12 besteht aus mehreren miteinander drehfest verbundenen Abschnitten, welche sich durch unterschiedliche Steigung oder auch durch unterschiedliche Förderrichtung unterscheiden können. Im dargestellten, rein schematischen Beispiel folgt auf einen relativ langen Abschnitt 12' am rechten Schneckenende ein relativ kurzer Abschnitt 12'' mit entgegengesetzter Förderrichtung, welcher aufgrund seiner geringeren Länge lediglich zu einem Anstau des Extrudermaterials in diesem Bereich führt. Ein in Fig. 1 mit A bezeichneter Axialabschnitt des Extruders 10 kann daher als Anstau- oder Kompressionszone bezeichnet werden, die einen vakuumdichten Abschluß der nachfolgenden Zonen gegen Atmosphäre darstellt. Auf dem Kern 29 der Schnecke 12 können neben den dargestellten Gängen 30 auch noch weitere Gänge vorgesehen sein und/oder radial abstehende Stifte zur Förderung der Vermischung des zugeführten Materials. An den kurzen Abschnitt 12'' schließt sich ein Abschnitt 12''' an, welcher in bezug auf seine Förderrichtung dem ersten Abschnitt 12' entspricht. Dies hat zur Folge, daß der Druck im Material (Paste) abfällt; auf die Zone A folgt dementsprechend eine mit B bezeichnete Dekompressionszone. Aufgrund des Druckabfalls im Material werden Wasserdampf sowie gelöste Gase frei. Im Bereich der Dekompressionszone B ist das Gehäuse 14 mit einem radialen Entgasungskanal 34 versehen, welcher Teil einer anhand von Fig. 2 noch näher zu erläuternden Entgasungseinrichtung 36 ist. Durch diesen Entgasungskanal 34 können die in der Dekompressionszone B freigesetzten Gase bzw. Dämpfe entweichen. Zur Unterstützung dieses Vorgangs ist die Entgasungseinrichtung 36 über einen Vakuumanschlußstutzen 38 an eine nicht dargestellte Vakuumabsaugeinrichtung angeschlossen. Auch kann das Schneckengehäuse 14 wenigstens im Bereich der Dekompressionszone B heizbar ausgebildet sein, um das Abdampfen zu verstärken.

An die Dekompressionszone B schließt sich eine zweite Anstauzone C an, auf die eine zweite Dekompressionszone D folgt,was durch entsprechende Ausbildung der einzelnen Schneckenabschnitte in diesem Bereich, wie vorstehend bereits beschrieben, erreicht wird. In dem Bereich dieser Zone D ist eine zweite Entgasungseinrichtung 36' entsprechend der ersten Entgasungseinrichtung 36 vorgesehen. Es schließt sich wiederum eine Anstauzone E an zum vakuumdichten Abschluß des anschließenden Bereichs gegen Atmosphäre. An die Austragsöffnung 40 des Extruders 10 am in Fig. 1 linken Extruderende schließt sich eine nicht dargestellte Kompaktierungs- und Strangschneidevorrichtung an.

Fig. 2 zeigt eine erste erfindungsgemäße Ausführungsform der Entgasungseinrichtung ähnlich der symbolischen Darstellung in Fig. 1. Die Entgasungseinrichtung 36 besteht aus einer in den zylindrischen Entgasungskanal 34 eingesetzten Förderschnecke 42 mit Kern 42a und Gang 42b. Die Förderschneckenachse 44 fällt mit der Zylinderachse des Entgasungskanals 34 zusammen. Die Achse 44 steht senkrecht zu der durch die beiden Achsen 46 und 48 der beiden Schnecken 50 bzw. 52 des Doppelwellen-Extruders 10 definierten Ebene 53 Die Achse 44 hat gleichen Abstand zu beiden Achsen 46 und 48. Der Durchmesser c des Kanals 34 ist geringfügig kleiner als diejenige Abmessung des die beiden Schnecken 50 und 52 aufnehmenden Schneckenraums 24 des Gehäuses 14, welche innerhalb der Ebene 53 liegt und zu den Achsen 46 und 48 senkrecht steht. Diese in Fig. 2 mit d bezeichnete Abmessung ist die größte Abmessung der in Fig. 2 dargestellten Querschnittsfläche des Schneckenraums 24.

Das Gehäuse 14 ist dreiteilig und besteht aus einem inneren, die beiden Schnecken 50 und 52 aufnehmenden im Querschnitt länglich ovalen Gehäuseteil 14a sowie zwei weiteren, das Teil 14a gemeinsam umschließenden Teilen, einem unteren Teil 14b und einem oberen Teil 14c Der erwähnte Kanal 34 durchsetzt sowohl das obere Teil 14c als auch das Teil 14a oberhalb der beiden Schnecken 50 und 52.

Der Kerndurchmesser e beträgt etwa 1/10 des dem Kanaldurchmesser c im wesentlichen entsprechenden Schneckendurchmessers f. Der Kern 42a ist an seinem unteren Ende mit einer radialen Stirnfläche 54 ausgebildet. Der Schneckengang 42b läuft hier in einer radial auf den Kern 42a zulaufenden, in der Ebene der Stirnfläche 54 liegenden Kante 56 aus. Bei einer Drehung der Förderschnecke 42 von oben her gesehen im Gegenuhrzeigersinn (Bewegungspfeil F) bewegt sich die Kante 56 längs einer zur Achse 44 senkrechten Kreisfläche, wobei der der Kante 56 vorangehende, in Drehrichtung und schwach nach oben geneigte Bereich des Schneckengangs 42b für eine Einebenung der über diese genannte Kreisfläche nach oben (d.h. in den Kanal 42) hochgequollenen Paste sorgt. An und für sich würde für dieses Einebnen ein die Kante 56 aufweisender rotierender oder hin- und herbewegbarer Spatel ausreichen; die Förderschnecke weist jedoch den Vorteil auf, daß momentan über die Kante 56 hochgequollenes Material wieder in den Bereich unterhalb der Förderschnecke rückgefördert wird.

Die Rotationsgeschwindigkeit der Schnecke 44 beträgt dabei etwa 60 Umdrehungen pro Minute. Der Antrieb der Förderschnecke 42 erfolgt über einen in Fig. 2 nicht dargestellten Druckluftmotor, welcher an das in Fig. 2 obere Ende der Schnecke 42 angekoppelt ist. Dieses Ende liegt außerhalb eines Absaugaufsatzes 60, welcher auf der Außenseite des Schneckengehäuses 14 (an der Oberseite des Gehäuseteils 14c) angeflanscht ist, wobei ein zylindrischer Innenraum 62 des Aufsatzes 60 mit dem Kanal 34 fluchtet. Der Absaugaufsatz 60 schließt den Kanal 34 gegen die Atmosphäre ab. Ferner ist er mit dem bereits in Zusammenhang mit Fig. 1 erwähnten Flansch 38 zum Anschluß an eine nicht dargestellte Vakuumabsaugeinrichtung versehen. Der Flansch 38 geht von Außenumfang des zylindrischen Absaugaufsatzes 60 aus. Dem Flansch 38 gegenüber liegt ein durch eine Beobachtungsscheibe 64 aus durchsichtigem Material abgeschlossener Flansch 66. Der Kern 42a der Förderschnecke 42 ist zum Anschluß an den erwähnten Druckluftmotor außerhalb des Absaugaufsatzes über eine Drehbewegungen erlaubende Vakuumdurchführung 68 eines oberen Deckelteils 70 des Absaugaufsatzes 60 nach außen geführt. Das Deckelteil 78 ist über eine Klammerverbindung 72 mit dem übrigen Gehäuse lösbar verbunden.

In den Fig. 3 und 4 ist eine zweite Ausführungsform der Entgasungseinrichtung dargestellt, welche allgemein mit 136 bezeichnet ist. Elemente in den Fig. 3 und 4, die Elementen in Fig. 2 ihrer Funktion nach entsprechen, sind mit denselben Bezugsziffern, jeweils vermehrt um die Zahl 100, versehen. Die Förderschnecke 42 der ersten Ausführungsform ist hierbei ersetzt durch eine Förderwalze 142 mit zylindrischer Umfangsfläche 143 mit anderer Orientierung; während die Achse 44 der Förderschnecke 42 in einer bezüglich der Schneckenachsen 46 und 48 radialen Ebene liegt, verläuft die Walzenachse 144 parallel zu den Achsen 146, 148 der beiden Schnecken 150 und 152. Der Rotationssinn (Pfeil B' in Fig. 3) ist entgegengesetzt zum Rotationssinn der beiden gleichsinnig rotierenden Schnecken 146 und 148 (Pfeile C' und D').

Die Förderwalze 142 ist in einen Entgasungskanal 134 eingesetzt, dessen zum Kanalquerschnitt senkrechte Kanalachse senkrecht auf der durch die an beiden Achsen 146 und 148 definierten Ebene 153 steht. Im Querschnitt ist der Kanal 134 rechteckig. Die zu den Achsen 146 und 148 (und 144) parallele Länge g des Kanalquerschnitts entspricht der axialen Länge der Förderwalze 142; die hierzu senkrechte Breite h des Kanalquerschnitts übersteigt den Durchmesser i der Förderwalze 142. Die Förderwalze 142 ist gemäß Fig. 3 derart angeordnet, daß ihre Achse 144 in Höhe der oberen Kanalmündung etwa in Breitenmitte verläuft. Die Walze 142 schließt demnach den Kanal 134 nur teilweise ab. In Fig. 3 links der Walze 142 ist ein erster Durchgang 135 ausgebildet, welcher zum einen durch die Walzenumfangsfläche 143 und zum anderen durch eine zu den Achsen 146, 148 parallele Seitenfläche 139 des Kanals 134 begrenzt ist. Der lichte Abstand m zwischen der Seitenfläche 139 des Kanals 134 und der Walzenumfangsfläche 143 beträgt etwa das 0,15-fache der Breite h des Kanalquerschnitts.

Dementsprechend ist auf der anderen Seite ein Durchgang 137 ausgebildet. Letzterer wird jedoch durch einen am (einteiligen) Schneckengehäuse 114 starr angebrachten, längs der Fläche 139 verlaufenden Abstreifer 141 etwa in Höhe der Achse 144 abgeschlossen. Mit einer Abstreiferkante 141a liegt der Abstreifer 141 am Außenumfang (längs einer Mantellinie) der Walze 142 an, so daß er am Walzenumfang angelagertes Pastenmaterial 157 bei der Rotation der Walze 142 in Richtung B'von der Walze abstreift und nach unten in den Bereich der in Fig. 3 rechten Walze 148 fallen läßt (Pfeil E' in Fig. 3).

Der Kanal 134 samt Walze 142 wird an der Außenseite des Gehäuses 114 von einem Absaugaufsatz 160 überdeckt, welcher entsprechend dem Aufsatz 60 gemäß Fig. 2 wiederum für eine vakuumdichte Abschließung des Kanals 134 zur Atmosphäre hin sorgt, wobei wiederum ein Absaugstutzen 138 vorgesehen ist zum Anschluß an eine nicht dargestellte Vakuumabsaugeinrichtung.

Der Antrieb der Walze 142 erfolgt über einen nicht dargestellten Druckluftmotor, dessen in Fig. 4 erkennbare Antriebswelle 174 über eine Vakuumdurchführung 168 in den Innenraum 162 des Aufsatzes 160 geführt ist mit zu den Achsen 146, 148, 144 paralleler Wellenachse 176. Am inneren Wellenende ist ein Stirn-Zahnrad 172 befestigt, welches mit einem zweiten Stirnzahnrad 178 an einem Ende einer Welle 180 der Walze 142 kämmt. Die Welle 180 steht an beiden axialen Enden der Walze 142 über diese vor und ist dort jeweils in einem Drehlager 182 gelagert. Die beiden Drehlager 182 sind starr mit einem Einsatzteil 184 verbunden, welches in das Gehäuse 114 eingesetzt ist und eine entsprechende in den Schneckenraum 124 einmündende Einsatzöffnung 186 (bis auf den Kanal 134) abschließt.

Der Aufsatz 160 ist mit zwei Beobachtungsfenstern 164 in der dem Kanal 134 gegenüberliegenden Deckenwand 170 versehen. Mit dem Gehäuse 114 ist der Aufsatz 160 vakuumdicht verflanscht.

Um eine zwischenzeitliche Abkühlung des Extrudermaterials im Bereich der Entgasungseinrichtung 136 auszuschließen, ist das Gehäuse 114 heizbar. Hierzu sind zumindest die Seitenwände doppelwandig ausgeführt, wie in Fig. 3 erkennbar. Der Doppelwandinnenraum 190 ist mit entsprechenden Anschlußstutzen zum Zuführen bzw. Abführen von Heizmedium, insbesondere Warmwasser oder Heißdampf, ausgebildet. Ein derartiger Stutzen 192 ist in Fig. 3 erkennbar.

Im Betrieb verhindert die rotierende Walze 142, daß das durch die beiden Schnecken 150 und 152 in den Dekompressionsbereich und damit in den Bereich des Kanals 134 beförderte pastenförmige Material im Kanal 134 hoch steigt und schließlich in den Durchgang 135 eintritt und über die Gehäuseaußenseite hinaus in den Innenraum 162 des Aufsatzes 160 eindringt. Die in Pfeilrichtung B' drehende Walze 142 nimmt das pastöse Material in Richtung B' mit, bis es schließlich in den Fangbereich der in Fig. 3 rechten Schnecke 152 gelangt, deren Förderrichtung (in Fig. 3 nach rechts) die gleiche ist wie die an der Unterseite der Walze 142. Die Oberfläche der Förderwalze 142 ist hierfür derart ausgebildet, daß die Paste adhäriert. Dementsprechend bleibt am Walzenumfang entweder eine durchgehende oder eine unterbrochene Schicht 157 von Extrudermaterial hängen, sobald sich der entsprechende Walzenumfangsabschnitt von dem in den Kanal 134 hochgequollenen Material löst. Diese in Fig. 3 eingezeichnete Schicht 157 bewegt sich weiter zum Abstreifer 141 und wird von diesem von der Walze 142 entfernt, woraufhin das Material nach unten abfällt (Pfeilrichtung E') und in den Fangbereich der Walze 152 gelangt. Diese Schicht 157 bildet eine zusätzliche, relativ große Verdampfungs- und Entgasungsfläche, die unter dem herrschenden Vakuum für eine schnelle und gründliche Entfeuchtung bzw. Entgasung sorgt. Die in dem durch den Abstreifer 141 abgeschlossenen Bereich rechts der Förderwalze 142 in Fig. 3 gebildeten Gase können unter der Walze 142 hindurch ohne weiteres in den Bereich links der Walze 142 gelangen und durch den Durchgang 135 nach oben hin entweichen. Dies liegt daran, daß das Pastenmaterial unterhalb der Walze 142 in stetiger Bewegung ist und keinesfalls durchgehend glatt an der Walze 142 anliegt, so daß stets Durchgangskanäle für gebildete Gase vorhanden sind. Man kann jedoch auch zusätzlich den Abstreifer 142 mit Durchgangslöchern versehen, so daß die unterhalb des Abstreifers gebildeten Gase unmittelbar nach oben entweichen können.

Der anhand der Figuren vorstehend beschriebene Zweiwellen-Extruder 10 in seinen beiden Ausführungen eignet sich generell für die Trocknung und Entgasung von pastenartigen Materialien, die dabei gleichzeitig einer intensiven Durchmischung unterzogen werden. Von besonderem Vorteil ist der Einsatz des erfindungsgemäßen Extruders in Zusammenhang mit der Herstellung von peroxidhaltigen Pasten. Im folgenden wird das die Herstellung dieser Pasten betreffende erfindungsgemäße Verfahren durch einige Beispiele näher erläutert.

### Beispiel 1

Eine Mischung aus 43,5% 2,4-Dichlorbenzoylperoxid, 43,5% Silikonöl der Viskosität 350 mPa.s., 10% H₂O und 3,0% Benzin vom Kp 70 °C wird vermittels Synthese durch Umsatz von 2,4-Dichlorbenzoylchlorid mit alkalischer Wasserstoffperoxidlösung in Gegenwart von Silikonöl und Benzin "in situ" hergestellt.

Man fördert diese bezüglich Wassergehalt heterogene, granulatartige Masse mit Hilfe der Schnecken-Exzenterpumpe 20 in den Extruder 10, ggf. in ein nicht dargestelltes Einlaufgehäuse des Extruders.

An dieser Stelle wird durch den mechanischen Verdichtungsprozeß ein großer Teil des mechanisch anhaftenden Wassers abgepreßt (Kanäle 24, 26). Die in die Anstauzone A des Extruders eintretende Masse hat dann eine Zusammensetzung von z.B. 46,5% 2,4-Dichlorbenzoylperoxid, 46,5% Silikonöl, 4% H₂O und 3% Benzin.

Bei Vorbeigang der Masse an der 1. Entgasungseinrichtung 36 vermindert sich der Gehalt an Benzin auf ca. 0,5% und von Wasser auf ca. 1,5%; nach Vorbeilauf an der 2. Entgasungseinrichtung 36' sind Benzin und Wasser vollständig entfernt. Der Extruder wird bei diesem Prozeß mit Wasser von 35 °C beheizt; nur das Austragsende wird mit Kühlwasser beaufschlagt.

In den Entgasungseinrichtungen 36, 36', die mit der als Bandschnecke bezeichenbaren Förderschnecke 42 zur Rückführung des aufsteigenden Materials ausgestaltet sind (Abb. 1),bilden sich keinerlei Verstopfungen. Die Gase (Brüden) können bei dem eingestellten Vakuum von ca. 12 mbar ungehindert abgezogen werden. Mit gleichem Erfolg kann man Entgasungseinrichtungen benutzen, die mit der Walzen-Rückführung gemäß Fig. 3 und 4 ausgestattet sind.

Die fertige Paste wird über ein Kompaktierungsmundstück an Atmosphäre ausgetragen und in Behälter abgefüllt. Sie hat eine ausgezeichnete Qualität, die insbesondere in den anwendungstechnisch wichtigen Festigkeitswerten (DIN 53504) eines mit dieser Raste hergestellten Silikonkautschuks zum Ausdruck kommt:
Zugfestigkeit 12 N/mm² ± 1
Die nach bisheriger Methode, d.h., unter Verwendung von Chargenknetern, hergestellten Produkte zeigen vergleichsweise niedrigere Festigkeitswerte von 10 N/mm² ± 2 für die Zugfestigkeit und für die Dehnung, mit einer höheren Schwankungsbreite.

Dies beweist die verbesserte Homogenität der erfindungsgemäß hergestellten Pasten. Eine weniger homogene Verteilung des Vernetzers in der Paste - und damit auch nach Einarbeitung in Silikonkautschuk - bewirkt an den Stellen höherer Peroxidkonzentration eine größere Vernetzungsdichte, die sich in einer verminderten Festigkeit bemerkbar macht.

### Beispiel 2

Durch "in situ"-Synthese wird eine Mischung von 42% Benzoylperoxid, 42% Silikonöl der Viskosität 350 mPa.s., 13% H₂O und 3% Benzin hergestellt und nach der im 1. Beispiel geschilderten Verfahrensweise verarbeitet. Der Extruder ist hierbei mit zwei Förderwalzen-Entgasungseinrichtungen 136 gemäß Fig. 3 und 4 ausgerüstet, mit denen die Paste einwandfrei in den Schneckenraum 124 (Extruderraum) zurückgeführt wird.

Die Zugfestigkeit von Vulkanisaten, die mit der erfindungsgemäß hergestellten Paste erhalten werden, liegen bei 13 N/mm² ± 1 und damit um ca. 30% höher als bei Produkten aus chargenweiser Herstellung.

### Beispiel 3

Eine "in situ" hergestellte Mischung von 47% Benzoylperoxid, 47% Chlorparaffin und 4% H₂O wird entsprechend Beispiel 2 zu einer 50-%igen Paste verarbeitet. Im Vergleich zur chargenweise produzierten Paste wird eine völlig homogene Verteilung des Peroxids in der Matrix erreicht. Besonders vorteilhaft ist die Abwesenheit von Wasser in der Paste für deren Einarbeitung in Polyesterharze.

### Beispiel 4

Eine Mischung von 54% Cyclohexanonperoxid, 36% Diisobutylphthalat und 10% H₂O wird im Extruder mit Walzenrückführung getrocknet und homogenisiert. Die 60-%ige Paste zeichnet sich durch eine besonders hohe Lagerstabilität aus.

### Beispiel 5

Durch "in situ"-Synthese wurde eine Mischung von 46% t-Butylcyclohexlperoxydicarbonat, 46% Silikonöl mit einer Viskosität von 100 mPa.s. und 8 % H₂O hergestellt und entsprechend Beispiel 1 in einem Extruder mit Förderschneckenrückführung getrocknet und homogenisiert. Die 60% Peroxid enthaltende Paste liefert Silikonkautschuk-Vulkanisate mit günstigen Festigkeitswerten schon bei niedrigen Verarbeitungstemperaturen.

In ähnlicher Weise können pastenartige Abmischungen auch von anderen Peroxiden, ggf. unter Zusatz von Coagents wie z.B. Azoisobuttersäurenitril, in optimaler Qualität hergestellt werden.

### Beispiel 6

Eine Mischung aus 48 Teilen TMCH (1,1-bis-t-Butylperoxy-3,3,5-trimethylcyclohexan), 85-%ig, in Benzin vom Kp 70 °C und 15 Teilen EPDM (Viskosität Mooney 35 bei 100 °C), 20 Teilen Kieselsäure FK 320 und 24 Teilen Sokal U1 Kreide wird in den Zweiwellen-Extruder eingeführt und homogenisiert.

Über die Entgasungskanäle wird das Benzin abgezogen. Nach Austritt hat die Masse max. 80 °C und enthält weniger als 1% Benzin. Der Extruder wird mit Wasser von 8 °C gekühlt.

Die Masse, ein sog. "Masterbatch", wird luftgekühlt und kann auch granuliert werden.

Vorteilhaft ist bei diesem Verfahren die gefahrlose Entfernung des im Endprodukt unerwünschten Phlegmatisierungsmittels Benzin.

Reines TMCH ist explosiv und könnte nicht zur Herstellung dieses "Masterbatches" verwendet werden.

Leicht flüchtige Weichmacher stören bei der Anwendung zur Kautschukvernetzung; z.B. im drucklosen Salzbadverfahren verursachen sie Blasenbildung.

### Beispiel 7

Eine Mischung aus mit einer Pumpe in Methylenchlorid 40% gelöst zugegebenem Dicumylperoxid (40 Gewichtsteile), pulverförmigem EPDM-Kautschuk (Viskosität Mooney 35 bei 100 °C 8 + 1 Min., 20 Gewichtsteile), Kreide SOKAL U1 (30 Gewichtsteile) und Weichmacher TUDALEN B 80 EXTRA (10 Gewichtsteile) werden in den Zweiwellen-Extruder eingeführt, homogenisiert und entgast.

Nach Austritt hat die Masse max. 90 °C und enthält keine Inhomogenitäten und weniger als 1% Methylenchlorid. Der Extruder wird mit Wasser von 8 °C gekühlt.

Dieses "Masterbatch" kann für Vernetzung von z.B. EPDM-Kautschuk im Kabelbereich, für den hohe Reinheitsanforderungen bestehen, eingesetzt werden.

Um zu verhindern, daß Grobteilchen oder Verunreinigungen in der Peroxidabmischung vorhanden sind, kann in den Kopf am Abgabeende des Extruders eine Siebplatte mit eingebaut werden. Damit läßt sich sicherstellen, daß die Reinheitsanforderungen der Kabelindustrie für Hochspannungskabel erfüllt werden.

Das erfindungsgemäße Verfahren bietet gegenüber dem Chargenprozeß sicherheitstechnische Vorteile.

Bei einem Chargenkneter beträgt die Füllung z.B. 300 kg 50-%iger Paste entsprechend ca. 150 kg organischem Peroxid.

Im Falle einer durch Reibung initiierten Zersetzung kann die Maschine erheblich beschädigt werden; auf jeden Fall würde die Umgebung durch die entstehenden Zersetzungsprodukte verunreinigt. Bei Anwendung des erfindungsgemäßen Verfahrens würde im Falle einer Zersetzung des organischen Peroxids nur die im Extruder befindliche Masse von ca. 2,5 kg betroffen. Deren Zersetzungsprodukte würden über die Vakuumleitung abgesaugt. Durch geeignete Überwachungseinrichtungen kann damit die Zersetzung einer größeren Menge organischer Peroxide völlig verhindert werden.

Erhebliche Vorteile bietet das erfindungsgemäße Verfahren hinsichtlich Arbeitsaufwand. Die manuelle Befüllung und Entleerung eines Chargenkneters erfordert bisher einen unvermeidlichen Krafteinsatz insbesondere bei sehr zähen Pasten. Das erfindungsgemäße Verfahren ermöglicht nunmehr eine kontinuierliche und sichere Produktion von Pasten organischer Peroxide und deren weitgehende Automatisierung.

Unter dem im vorstehenden verwendeten Begriff "Extrudermaterial" wird das im Extruder zu verarbeitende Material, z.B. die peroxidhaltige Paste, verstanden.

## Patentansprüche

1. Kontinuierliches Verfahren zur Herstellung einer peroxidhaltigen Zusammensetzung mit hohem Peroxidgehalt in Form einer Paste oder plastischen Masse, wobei man
eine Mischung einer Peroxid enthaltenden Zusammensetzung mit mindestens 40 Gew.-% Peroxid in fester und/oder flüssiger Form zusammen mit verdampfbaren Bestandteilen in einen Schnecken-Extruder einbringt;
die darin enthaltende Mischung homogenisiert und entgast um sie von verdampfbaren Bestandteilen zu befreien,
die freie Oberfläche (Abdampffläche) der im Extruder zu verarbeitenden Mischung innerhalb des Entgasungskanals mehr als 40 % des Entgasungskanalquerschnitts beträgt und;
man im Entgasungskanal eine Rückfördereinrichtung vorsieht, um im wesentlichen die in den Entgasungskanal eintretende Mischung in den Extruder zurückzuführen und der kleinste Gasdurchgangsquerschnitt in der Rückfördereinrichtung wenigstens das 0.1-fache des Entgasungskanalquerschnitts beträgt.

2. Verfahren nach Anspruch 1
dadurch **gekennzeichnet,**
daß der Verdampfungs- bzw. Trocknungsprozeß im Vakuum durchgeführt wird.

3. Entgasungseinrichtung an einem Schnecken-Extruder (10) oder dergl. zur Durchführung des Verfahrens nach einem der Ansprüche 1 bis 2, mit einem die Schnecke (12) bzw. die Schnecken (50,52;150,152) aufnehmenden Schneckengehäuse (14;114), welches mit wenigstens einem in den Schneckenraum (24;124) des Gehäuses (14;114) mündenden Entgasungskanal (34;134) und einer am Entgasungskanal (34;134) angeordneten Rückfördereinrichtung (36; 36'; 136) für aus dem Schneckenraum (24;124) in den Entgasungskanal (34;134) eingedrungenes Material versehen ist, wobei die Rückfördereinrichtung (36;36';136) ein innerhalb des Entgasungskanals (34;134) angeordnetes, zum Schneckenraum (24;124) hin förderndes Förderelement umfaßt,
dadurch **gekennzeichnet,**
daß die freie Oberfläche (Abdampffläche) des im Extruder zu verarbeitenden Materials innerhalb des Entgasungskanals (34;134) mehr als 40% des Entgasungskanalquerschnitts beträgt, und daß der kleinste Gasdurchgangsquerschnitt der Rückfördereinrichtung wenigstens das 0,1-fache, besser wenigstens das 0,15-fache des Entgasungskanalquerschnitts beträgt.

4. Entgasungseinrichtung nach Anspruch 3,
dadurch **gekennzeichnet,**
daß die Fördereinrichtung (36) einen wenigstens einen Teil des Entgasungskanalquerschnitts überstreichenden, einzelnen, vorzugsweise rotierenden, geneigten Spatel umfaßt, vorzugsweise in Form einer einzigen Förderschnecke (42) im Entgasungskanal (34), vorzugsweise mit zur Kanalachse im wesentlichen parallele Schneckenachse (44), welche zum Schneckenraum (24) hin fördert.

5. Entgasungseinrichtung nach Anspruch 4,
dadurch **gekennzeichnet,**
daß die Förderschneckenachse (44) mit der Achse des hohlzylindrischen Entgasungskanals (34) zusammenfällt, und daß der Förderschneckendurchmesser (f) dem Kanaldurchmesser (c) im wesentlichen entspricht.

6. Entgasungseinrichtung nach Anspruch 4 oder 5,
dadurch **gekennzeichnet,**
daß der oder die Schneckengänge (42b) der Förderschnecke (42) am schneckenraumnächsten Schneckenende jeweils eine auf den Kern (42a) radial zulaufende Endkante (56) aufweisen.

7. Entgasungseinrichtung nach einem der Ansprüche 4 bis 6,
dadurch **gekennzeichnet,**
daß der Förderschneckendurchmesser (f) etwa das 5- bis 20-fache, vorzugsweise das etwa 8- bis 15-fache, am besten etwa das 10-fache des Kerndurchmessers (e) beträgt.

8. Entgasungseinrichtung nach einem der Ansprüche 4 bis 7,
dadurch **gekennzeichnet,**
daß der Kanaldurchmesser (c) etwa der zur Schneckenraumlängsachse (46,48) und zur Kanalachse (44) senkrechten Abmessung (d) des Schneckenraums (24) entspricht.

9. Entgasungseinrichtung nach einem der Ansprüche 3 bis 4,
dadurch **gekennzeichnet,**
daß die Rotationsgeschwindigkeit der Förderschnecke etwa 20 bis 120, vorzugsweise etwa 40 bis 80, am besten etwa 60 Umdrehungen pro Minute beträgt.

10. Entgasungseinrichtung nach Anspruch 3,
dadurch **gekennzeichnet,**
daß die Rückfördereinrichtung (136) eine Förderwalze (142) im Entgasungskanal (134) mit zur Kanalachse (146, 148) im wesentlichen senkrechter Walzenachse (144) umfaßt, welche zum Schneckenraum (124) hin fördert.

11. Entgasungseinrichtung nach Anspruch 10,
dadurch **gekennzeichnet,**
daß die Walzenachse (144) im wesentlichen parallel zur Schneckenraumlängsachse (146;158) verläuft.

12. Entgasungseinrichtung nach Anspruch 10 oder 11,
dadurch **gekennzeichnet,**
daß der Rotationssinn (B') der Förderwalze (142) zum Rotationssinn (C',D') des bzw. der Schnecken (150,152) im Schneckenraum (124) entgegengesetzt ist.

13. Entgasungseinrichtung nach einem der Ansprüche 3 bis 12,
**gekennzeichnet** durch
einen das äußere Entgasungskanalende abdeckenden Absaugaufsatz (60;160) am Schneckengehäuse (14;114), weicher an eine Vakuumabsaugeinrichtung angeschlossen ist.

14. Entgasungseinrichtung nach einem der Ansprüche 3 bis 13,
dadurch **gekennzeichnet,**
daß die Rückfördereinrichtung (136) heizbar ist, vorzugsweise durch Hindurchleiten von Heizmedium durch einen Gehäusewandinnenraum (190) eines doppelwandigen Gehäuses (114) der Rückfördereinrichtung.

15. Extruder mit einer Entgasungseinrichtung nach einem der Ansprüche 3 bis 14 zur Durchführung des Verfahrens nach einem der Anspruche 1 bis 2,
dadurch **gekennzeichnet,**
daß er als Doppelwellen-Extruder (10), vorzugsweise mit gleichsinnig drehenden Schnecken (46,48) ausgebildet ist.

16. Extruder mit einer Entgasungseinrichtung nach einem der Ansprüche 3 bis 14, zur Durchführung des Verfahrens nach einem der Ansprüche 1 bis 4,
dadurch **gekennzeichnet,**
daß er als Einwellen-Extruder mit axial, vorzugsweise impulsartig bewegbarer Schnecke ausgebildet ist.

17. Extruder nach Anspruch 15 oder 16 oder dem Oberbegriff des Anspruchs 15,
**gekennzeichnet** durch
zwei in Richtung der Schneckenraum-Längsachse hintereinander angeordnete Entgasungseinrichtungen (36, 36').

18. Extruder nach Anspruch 15 oder 16 oder dem Oberbegriff des Anspruchs 15,
**gekennzeichnet** durch
eine Dosiereinrichtung, vorzugsweise eine Exzenter-Schneckenpumpe (20), im Bereich der Materialzugabeöffnung des Extruders (10).

## Claims

1. A continuous process for the manufacture of a peroxide-containing composition with a high peroxide content, in the form of a paste or plastic composition in which
a mixture of a peroxide-containing composition having at least 40% by weight peroxide in solid and/or liquid form is introduced into a worm extruder together with evaporable constituents;
the mixture contained therein is homogenised and degassed in order to free it from evaporable constituents,
the free surface (evaporation area) of the mixture to be processed in the extruder, inside the degassing passage amounts to more than 40% of the degassing passage cross-section and
in that there is in the degassing passage a return delivery device for feeding back to the extruder substantially the mixture which enters the degassing passage, the minimum gas passage cross-section in the return delivery device amounting to at least 0.1 times the degassing passage cross-section.

2. A process according to Claim 1, characterised in that the evaporation and/or drying process is conducted in vacuo.

3. A degassing apparatus on a worm extruder (10) or the like for carrying out the process according to one of Claims 1 to 2 with, receiving the worm or worms (50, 52; 150, 152) a worm housing (14; 114) having, opening out into the worm chamber (24; 124) of the housing (14; 114) at least one degassing passage (34; 134) and, disposed on the degassing passage (34; 134), a return delivery device (36; 36'; 136) for material passing out of the worm chamber (24; 124) and penetrating the degassing passage (34; 134), the return delivery device (36; 36'; 136) comprising a delivery element disposed inside the degassing passage (34; 134) and delivering in the direction of the worm chamber (24; 124),
characterised in that
the free surface (evaporation area) of the material to be processed in the extruder, inside the degassing passage (34; 134), amounts to more than 40% of the degassing passage cross-section and in that the minimum gas passage cross-section of the return delivery device amounts to at least 0.1 times and preferably at least 0.15 times the degassing passage cross section.

4. A degassing apparatus according to Claim 3, characterised in that the delivery device (36) comprises a single, preferably rotating, inclined scraper sweeping over at least a part of the degassing passage cross-section, preferably in the form of a single conveyor worm (42) in the degassing passage (34), preferably with a worm axis substantially parallel with the passage axis and delivering in the direction of the worm chamber (24).

5. A degassing apparatus according to Claim 4, characterised in that the conveyor worm axis (44) coincides with the axis of the hollow cylindrical degassing passage (34) and in that the conveyor worm diameter (f) substantially corresponds to the diameter (c) of the passage.

6. A degassing apparatus according to Claim 4 or 5, characterised in that the spiral or spirals (42b) of the conveyor worm (42) have at the end of the worm closest to the worm chamber respective terminal edges (56) converging radially towards the core (42a).

7. A degassing apparatus according to one of Claims 4 to 6, characterised in that the conveyor worm diameter (f) amounts to substantially 5 to 20 times and preferably about 8 to 15 times and better still about 10 times the core diameter (e).

8. A degassing apparatus according to one of Claims 4 to 7, characterised in that the passage diameter (c) corresponds substantially to the dimension (d) of the worm chamber (24) at right-angles to the passage axis (44) and the longitudinal axis (46, 48) of the worm chamber.

9. A degassing apparatus according to one of Claims 3 to 4, characterised in that the speed of rotation of the conveyor worm amounts to about 20 to 120 and preferably about 40 to 80 and better still about 60 revolutions per minute.

10. A degassing apparatus according to Claim 3, characterised in that the return delivery device (136) comprises a conveyor roll (142) in the degassing passage (134), the axis (144) of the roll which delivers towards the worm chamber (124) being substantially at right-angles to the passage axis (146, 148).

11. A degassing apparatus according to Claim 10, characterised in that the roll axis (144) extends substantially parallel with the longitudinal axis (146; 158) of the worm chamber.

12. A degassing apparatus according to Claim 10 or 11, characterised in that the direction of rotation (B') of the conveyor roll (142) is opposite to the direction of rotation (C', D') of the worm or worms (150, 152) in the worm chamber (124).

13. A degassing apparatus according to one of Claims 3 to 12, characterised by, covering the outer end of the degassing passage, an extractor attachment (60; 160) on the worm housing (14; 114) which is connected to a vacuum extraction device.

14. A degassing apparatus according to one of Claims 3 to 13, characterised in that the return delivery device (136) is heatable, preferably by a heating medium being passed through a chamber (150) within the housing walls of a double-walled housing (114) of the return delivery device.

15. An extruder with a degassing apparatus according to one of Claims 3 to 14 for carrying out the method according to one of Claims 1 to 2, characterised in that it is constructed as a double-shaft extruder (10), preferably with worms (46, 48) rotating in the same direction.

16. An extruder with a degassing apparatus according to one of Claims 3 to 14, for carrying out the method according to one of Claims 1 to 4, characterised in that it is constructed as a single shaft extruder with a worm adapted for axial, preferably pulsating, movement.

17. An extruder according to Claim 15 or 16 or the preamble to Claim 15, characterised by two degassing apparatuses (36, 36') disposed serially in the direction of the longitudinal axis of the worm chamber.

18. An extruder according to Claim 15 or 16 or the preamble to Claim 15, characterised by a quantitatively dispensing device, preferably an eccentric worm pump (20), in the region of the material feed aperture of the extruder (10).

## Revendications

1. Procédé continu de préparation d'une composition contenant du peroxyde, à teneur élevée en peroxyde, sous forme d'une pâte ou d'une masse plastique, dans lequel
on réalise un mélange d'une composition contenant du peroxyde dont la teneur en peroxyde est d'au moins 40 % en poids sous une forme solide et/ou fluide avec des composants évaporables dans une extrudeuse à vis;
on rend homogène le mélange contenu dans cette dernière et on le soumet à un dégazage de manière à le libérer des composants évaporables;
la surface libre (surface d'évaporation) du mélange à traiter dans l'extrudeuse représente à l'intérieur du canal de dégazage plus de 40 % de la section du canal de dégazage; et
on prévoit dans le canal de dégazage un dispositif de renvoi pour renvoyer essentiellement le mélange qui pénètre dans le canal de dégazage vers l'extrudeuse et la section la plus petite du passage des gaz dans le dispositif de renvoi représente au moins 0,1 fois la section du canal de dégazage.

2. Procédé selon la revendication 1, caractérisé en ce que le processus d'évaporation ou de séchage est réalisé sous vide.

3. Dispositif de dégazage dans une extrudeuse à vis (10) ou analogue pour la mise en oeuvre du procédé selon l'une des revendications 1 et 2, comprenant un logement (14; 114) dans lequel est reçue la vis (12) ou les vis (50, 52; 150, 152), logement qui est muni d'au moins un canal de dégazage (34; 134) débouchant dans l'enceinte à vis (24; 124) du logement (14; 114) et un dispositif de renvoi (36; 36'; 136) monté dans le canal de dégazage (34; 54) pour le matériau qui est refoulé de l'enceinte à vis (24; 124) dans le canal de dégazage (34; 134), le dispositif de renvoi (36; 36'; 136) comprenant un élément transporteur disposé à l'intérieur du canal de dégazage (34; 134) et refoulant en direction de l'enceinte à vis (24; 124);
caractérisé en ce que la surface libre (surface d'évaporation) du matériau à traiter dans l'extrudeuse représente à l'intérieur du canal de dégazage (34; 134) plus de 40% de la section du canal de dégazage, et en ce que la section la plus petite du passage à gaz du dispositif de renvoi représente au moins 0,1 fois, et de préférence au moins 0,15 fois la section du canal de dégazage.

4. Dispositif de dégazage selon la revendication 3,
caractérisé en ce que le dispositif transporteur (36) comprend une palette individuelle inclinée, de préférence rotative, balayant au moins une partie de la section du canal de dégazage, se présentant de préférence sous la forme d'une vis transporteuse unique (42) dans le canal de dégazage (34), de préférence avec un axe de vis (44) sensiblement parallèle à l'axe du canal et qui refoule en direction de l'enceinte à vis (24).

5. Dispositif de dégazage selon la revendication 4,
caractérisé en ce que l'axe (44) de la vis transporteuse coïncide avec l'axe du canal de dégazage cylindrique et creux (34), et en ce que le diamètre de la vis transporteuse (f) correspond sensiblement au diamètre (c) du canal.

6. Dispositif de dégazage selon la revendication 4 ou 5,
caractérisé en ce que la ou les spires (42b) de la vis transporteuse (42) comprennent respectivement à l'extrémité de la vis qui est la plus proche de l'enceinte à vis un bord d'extrémité (56) s'étendant radialement à partir de l'arbre central (42a).

7. Dispositif de dégazage selon l'une des revendications 4 à 6,
caractérisé en ce que le diamètre (f) de la vis transporteuse représente environ de 5 à 20 fois, de préférence environ de 8 à 15 fois et mieux encore environ 10 fois le diamètre (e) de l'arbre central.

8. Dispositif de dégazage selon l'une des revendications 4 à 7,
caractérisé en ce que le diamètre (c) du canal correspond sensiblement à la dimension (d) de l'enceinte à vis (24) perpendiculairement à l'axe longitudinal (46, 48) des vis et à l'axe (44) du canal.

9. Dispositif de dégazage selon l'une des revendications 3 à 4,
caractérisé en ce que la vitesse de rotation de la vis transporteuse est d'environ 20 à 120, de préférence d'environ 20 à 80 et mieux encore d'environ 60 tours à la minute.

10. Dispositif de dégazage selon la revendication 3,
caractérisé en ce que le dispositif de renvoi (136) comprend un cylindre transporteur (142) dans le canal de dégazage (134), avec un axe de cylindre (144) sensiblement perpendiculaire à l'axe (146, 148) du canal, dispositif qui refoule en direction de l'enceinte à vis (124).

11. Dispositif de dégazage selon la revendication 10,
caractérisé en ce que l'axe (144) du cylindre est sensiblement parallèle à l'axe longitudinal (146; 148) de l'enceinte à vis.

12. Dispositif de dégazage selon la revendication 10 ou 11,
caractérisé en ce que le sens de rotation (B') du cylindre transporteur (142) est contraire au sens de rotation (C', D') de la ou des vis (150, 152) dans l'enceinte à vis (124).

13. Dispositif de dégazage selon l'une des revendications 3 à 12,
caractérisé par un dispositif d'aspiration (60; 160) recouvrant l'extrémité extérieure du canal dé dégazage sur le logement à vis (14; 114), qui est raccordé à un dispositif d'aspiration sous vide.

14. Dispositif de dégazage selon l'une des revendications 3 à 13,
caractérisé en ce que le dispositif de renvoi (136) peut être chauffé, de préférence en faisant passer un agent chauffant par une enceinte interne (190) d'un logement à double paroi (114) du dispositif de renvoi.

15. Extrudeuse comprenant un dispositif de dégazage selon l'une quelconque des revendications 3 à 14 pour la mise en oeuvre du procédé selon l'une des revendications 1 et 2,
caractérisée en ce qu'elle est constituée sous forme d'une extrudeuse à double arbre (10), avec des vis (46, 48) tournant de préférence dans le même sens.

16. Extrudeuse comprenant un dispositif de dégazage selon l'une des revendications 3 à 14 pour la mise en oeuvre du procédé selon l'une des revendications 1 et 2,
caractérisée en ce qu'elle est constituée sous forme d'une extrudeuse à arbre unique comprenant une vis axiale pouvant être entraînée de préférence par impulsions.

17. Extrudeuse selon la revendication 15 ou 16, ou le préambule de la revendication 15,
caractérisée par deux dispositifs de dégazage (36, 36') disposés l'un à l'arrière de l'autre dans la direction de l'axe longitudinal de l'enceinte à vis.

18. Extrudeuse selon la revendication 15 ou 16 ou le préambule de la revendication 15,
caractérisée par un dispositif de dosage, de préférence une pompe à vis excentrique (20), dans la région de l'ouverture d'entrée de matériau de l'extrudeuse (10).
